# EUROPEAN PATENT APPLICATION

(11) **EP 4 339 637 A1**
(43) Date of publication of application: **20.03.2024**
(21) Application number: 23158975.5
(22) Date of filing: 28.02.2023
(51) Int. Cl.: G01S 7/481, G01S 7/486, G01S 7/487, G01S 17/08

(54) **RANGING APPARATUS AND METHOD FOR CONTROLLING RANGING APPARATUS**

(30) Priority: 13.09.2022 JP 2022145421
(71) Applicant: KABUSHIKI KAISHA TOSHIBA, Minato-ku Tokyo 105-0023 (JP)
(72) Inventor: KUBOTA, Hiroshi, Tokyo, 105-0023 (JP); HIRONO, Masatoshi, Tokyo, 105-0023 (JP); MATSUMOTO, Nobu, Tokyo, 105-0023 (JP); KIMURA, Katsuyuki, Tokyo, 105-0023 (JP)
(74) Representative: Hoffmann Eitle

(57) **Abstract**

According to one embodiment, a ranging apparatus includes: an emitter configured to emit a laser beam; a bandpass filter configured to pass light having a transmission wavelength among reflected light of the laser beam; and a controller configured to control the transmission wavelength of the bandpass filter.

## Description

### FIELD

An embodiment described herein relates to a ranging apparatus and a method for controlling a ranging apparatus.

### BACKGROUND

A LIDAR-based ranging apparatus that emits a laser beam at a ranging target, receives reflected light from the target using a photosensor, and thereby finds a range receives ambient light in addition to the reflected light.

The ambient light is, for example, sunlight. The sunlight, which is larger in quantity of light than the emitted laser beam, affects ranging.

The sunlight differs in wavelength components from the emitted laser beam and reflected light.

To minimize the effect of ambient light, the ranging apparatus uses an optical bandpass filter that cuts off wavelength components other than emergent light.

The optical bandpass filter allows the ranging apparatus to receive light with the components of ambient light removed therefrom.

To minimize the effect of ambient light, it is necessary to minimize the wavelength pass band of the optical bandpass filter.

However, if the wavelength pass band is too narrow, emergent light will be filtered as well because the emergent light will shift from the pass band of the optical bandpass filter due to changes in the wavelength of the emergent light.

Thus, there is a problem in that ranging apparatuses will have their ranging performance degraded.

### BRIEF DESCRIPTION OF THE DRAWINGS

FIG. 1 is a block diagram showing an overall configuration of a ranging apparatus according to the present embodiment;
FIG. 2 is a diagram showing wavelength dependence of a bandpass filter;
FIG. 3 is a diagram showing a configuration of a light receiver and the bandpass filter;
FIG. 4 is a diagram showing an exemplary hardware configuration of a computer configured to run a series of controller processes using a program;
FIG. 5 is a flowchart showing an example of an operation performed by a controller;
FIG. 6 is a diagram showing a bandpass filter, a first actuator, and a light receiver according to a variation;
FIG. 7 is a diagram showing bandpass filters and a first actuator according to a variation;
FIG. 8 is a diagram showing a ranging apparatus according to a second embodiment; and
FIG. 9 is a diagram showing a ranging apparatus according to a third embodiment.

### DETAILED DESCRIPTION

According to one embodiment, a ranging apparatus includes: an emitter configured to emit a laser beam; a bandpass filter configured to pass light having a transmission wavelength among reflected light of the laser beam; and a controller configured to control the transmission wavelength of the bandpass filter.

### (First embodiment)

Embodiments of the present invention will be described below with reference to the accompanying drawings.

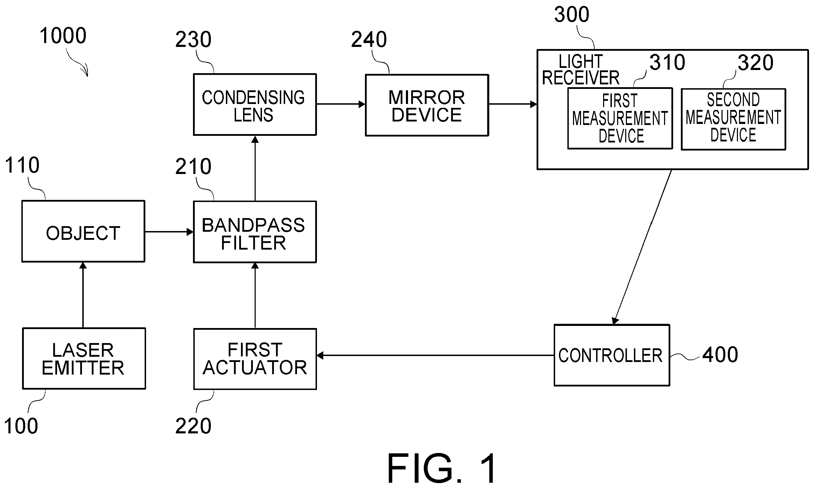

FIG. 1 shows an overall configuration of a ranging apparatus 1000 according to the present embodiment.

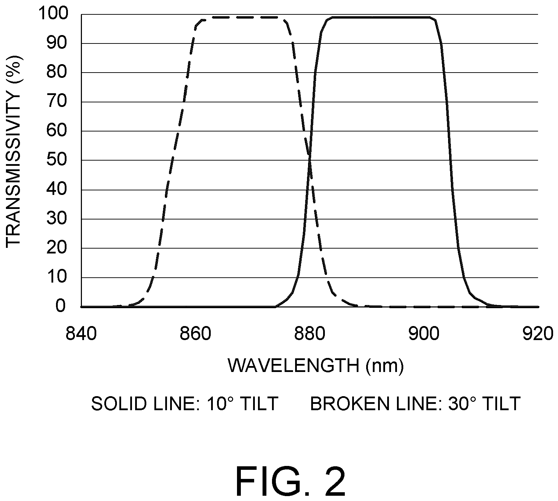

FIG. 2 shows wavelength dependence of a bandpass filter 210.

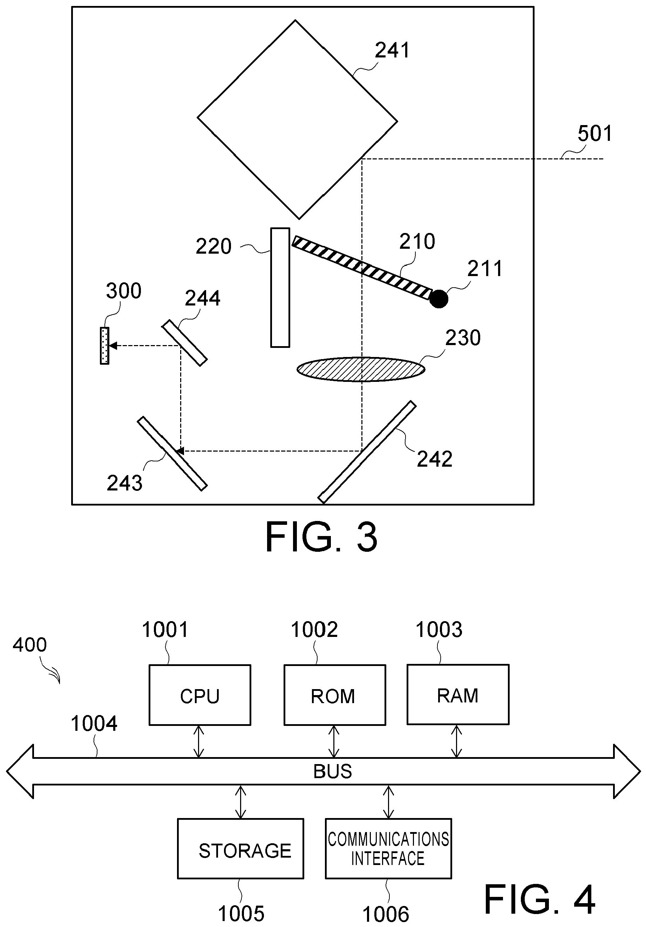

FIG. 3 shows a configuration of a light receiver 300 and the bandpass filter 210.

The ranging apparatus 1000 emits a laser beam, receives the laser beam reflected off an object 110, which is a ranging target, and thereby measures a distance to the target.

The ranging apparatus 1000 includes a laser emitter 100, a bandpass filter 210, a first actuator 220, a condensing lens 230, a mirror device 240, a light receiver 300, and a controller 400.

The laser emitter 100 emits a laser beam at the object 110, which is a ranging target.

The laser emitter 100 is a laser oscillator made up of an optical resonator, which is a laser source, a medium provided in the optical resonator, and a device configured to pump the medium.

The laser beam emitted by the laser emitter 100 is a beam of a specific wavelength.

The laser beam is a beam having a single wavelength and excellent directivity. The laser beam is characterized by high energy density and a uniform phase.

The laser beam emitted by the laser emitter 100 is reflected off the object 110.

The laser beam radiated by the laser emitter 100 shifts in wavelength with the temperature of the laser source.

For example, because the wavelength shifts approximately 0.3 nm per 1 K, the wavelength that is 900 nm at 300 K will shift to 915 nm at 350 K.

Regarding the optical resonator, which is a laser source, for manufacturing reasons, for example, due to manufacturing materials or slight individual differences in manufacturing equipment, even identical products that have gone through the same manufacturing processes based on the same design drawings do not become perfectly identical. Consequently, laser beams emitted by the optical resonator may undergo wavelength shifts.

For example, when laser beams are emitted under the same conditions using the same products, there may be a wavelength shift of around 20 nm between 895 nm and 915 nm.

The bandpass filter 210 is an optical bandpass filter configured to extract a specific wavelength component from reflected light, which is a reflected laser beam, and ambient light.

The bandpass filter 210 passes a frequency corresponding to a transmission wavelength among incident light and cuts off lights of other wavelengths.

The bandpass filter 210 cuts off wavelength components of ambient light such that the light receiver 300 will not be affected by the ambient light.

The ambient light is, for example, sunlight. The sun sends out rays of many wavelengths as the sunlight. The sunlight, which has a large quantity of light, affects light reception of the light receiver 300 if handled directly.

Desirably, to minimize the effect of ambient light, the bandpass filter 210 uses a filter having the narrowest possible pass band that passes only the light of the same wavelength as the laser beam.

If a filter having a narrow pass band with a fixed bandwidth is used, the bandpass filter 210 will filter out part of a reflected laser beam as well due to temperature conditions or individual dispersion. This makes it difficult for a photosensor to detect week reflected light from a distant location or a location where reflectivity of a subject is low, and degrades ranging performance accordingly.

For example, if the bandpass filter 210 has a wavelength pass band of approximately 50 nm in width, balance between the ranging performance and the effect of ambient light can be maintained.

The bandpass filter 210 has angle dependence of wavelength. The bandpass filter 210 changes the transmission wavelength with the incident angle of the laser beam.

For example, a laser beam incident upon the bandpass filter 210 tilted at 30 degrees and indicated by a broken line in FIG. 2 and a laser beam incident upon the bandpass filter 210 tilted at 10 degrees and indicated by a solid line in FIG. 2 differ in the wavelength at which the bandpass filter 210 is transparent.

Transmissivity of the bandpass filter 210 remains almost unchanged even if the range of transmission wavelengths varies. For example, the bandpass filter 210 tilted at 30 degrees and indicated by a broken line in FIG. 2 and the bandpass filter 210 tilted at 10 degrees and indicated by a solid line in FIG. 2 both have a transmission wavelength of approximately 25 nm in width and have only a small difference.

Consequently, the bandpass filter 210 allows the range of the transmission wavelength to be changed by about 30 nm, with the pass band being kept reduced. That is, the pass band can be changed according to the wavelength of the laser beam to be passed.

By being tilted, the bandpass filter 210 passes a laser beam reflected off the object 110. This makes it possible to pass the reflected laser beam, filter off ambient light, and thereby narrow the pass band without degrading the ranging performance.

According to the present embodiment, the bandpass filter 210 is made up of a single filter, but plural optical bandpass filters differing in transmission wavelength may be combined.

For example, the bandpass filter 210 may include two or more optical bandpass filters differing in transmission wavelength and switch among the optical bandpass filters according to reflected light.

For example, the bandpass filter 210 may include two or more optical bandpass filters differing in transmission wavelength and multiple optical bandpass filters may be placed in layers.

The first actuator 220 moves and thereby tilts the bandpass filter 210.

The first actuator 220 tilts the bandpass filter 210 based on an input signal sent from the controller 400.

The input signal sent from the controller 400 specifies an amount of tilt by which the bandpass filter 210 is to be tilted.

The first actuator 220 tilts the bandpass filter 210 so as to satisfy the amount of tilt.

According to the present embodiment, using a stepping motor, the first actuator 220 achieves a tilt equal in amount to the amount specified by the input signal.

According to the present embodiment, one shaft 211 of the bandpass filter 210 is fixed and the first actuator 220 is connected to the bandpass filter 210 on the side opposite the fixed side.

The first actuator 220 is a moving mechanism implemented by the stepping motor and when the stepping motor operates based on an input signal, the bandpass filter 210 rotates around the fixed shaft 211.

The bandpass filter 210, which is located on an optical path for the reflected laser beam, can vary its angle with respect to a light reception path by means of the rotation.

The condensing lens 230 is a condenser device configured to collect the reflected light passed through the bandpass filter 210.

The mirror device 240 changes the light reception path by means of specular reflection. The mirror device 240 is made up of one or more mirrors.

According to the present embodiment, the mirror device 240 includes a rotating mirror device 241, a first turning mirror device 242, a second turning mirror device 243, and a third turning mirror device 244.

The rotating mirror device 241 includes a rotating mirror. The rotating mirror device 241 controls a reflecting direction of a reflected laser beam easily and accurately. The rotating mirror device 241 easily deflects a reflected laser beam.

For example, the laser beam radiated by the laser emitter 100 is reflected diffusely off the object 110. The diffusely radiated laser beam reflects in various reflecting directions. The laser beam reflected in various directions might enter the bandpass filter 210 from various directions.

The reflected laser beam reflects off the rotating mirror device 241, and thereby forms reflected light 501 that enters the bandpass filter 210 from a specific direction.

For example, in FIG. 3, the reflected light 501 is indicated by a broken line.

Through rotation, the rotating mirror device 241 controls the reflecting laser beam so as to be able to reflect in an appropriate reflecting direction.

The rotation of the rotating mirror device 241 may be controlled by the controller 400.

The first turning mirror device 242, the second turning mirror device 243, and the third turning mirror device 244 bend and thereby change the light reception path.

The first turning mirror device 242, the second turning mirror device 243, and the third turning mirror device 244 are mirrors fixed at specific angles.

Each of the first turning mirror device 242, the second turning mirror device 243, and the third turning mirror device 244 specularly reflects the laser beam incident from a specific direction in a specific direction.

Through adjustment of the fixed angles, the first turning mirror device 242, the second turning mirror device 243, and the third turning mirror device 244 allow the incident angle of the laser beam to be adjusted.

The laser beam is reflected in a reflecting direction corresponding to an incident direction. This allows the first turning mirror device 242, the second turning mirror device 243, and the third turning mirror device 244 to adjust the laser beam so as to pass through the light reception path (a first optical path).

All or some of the first turning mirror device 242, the second turning mirror device 243, and the third turning mirror device 244 are used according to the number of times the laser beam is reflected.

For example, according to the present embodiment, the laser beam is reflected three times from the bandpass filter 210 before being received by the light receiver 300, and thus three turning mirror devices are required.

For example, if the laser beam is to be received by the light receiver 300 after being reflected once from the bandpass filter 210, only a single turning mirror device is required.

For example, if the laser beam is to be received by the light receiver 300 after being reflected twice from the bandpass filter 210, only two turning mirror devices are required.

The bandpass filter 210, the condensing lens 230, and the mirror device 240 may be arranged on the light reception path in another order.

For example, as with the present embodiment, the light reception path may be arranged to run through the rotating mirror device 241 included in the mirror device 240, the bandpass filter 210, the condensing lens 230, the first turning mirror device 242, the second turning mirror device 243, and the third turning mirror device 244 in this order.

For example, the mirror device 240, the bandpass filter 210, and the condensing lens 230 may be arranged in this order.

The light receiver 300 detects information about the reflected laser beam. The light receiver 300 sends the detected information to the controller 400.

The light receiver 300 includes a first measurement device 310 and a second measurement device 320.

The first measurement device 310 measures received light intensity of reflected light. The first measurement device 310 sends the measured intensity of received light to the controller 400 as a measured value.

The first measurement device 310 is, for example, a photosensor. The first measurement device 310 may be a photosensor used for ranging by the ranging apparatus 1000 or another sensor.

The first measurement device 310 may use another mechanism as long as the received light intensity of the reflected laser beam can be detected.

The second measurement device 320 measures received laser temperature. The second measurement device 320 sends the measured laser temperature to the controller 400 as a measured value.

The second measurement device 320 is, for example, a temperature sensor.

According to the present embodiment, the second measurement device 320 is placed close to the laser emitter 100 and electrically connected with the second measurement device 320.

The second measurement device 320, which is configured as part of the light receiver 300 through electrical connection with the light receiver 300, may be configured to be fully independent.

For example, the light receiver 300 and the second measurement device 320 may be configured to be completely separate bodies and may send respective measurement results separately to the controller 400.

The controller 400 controls the entire ranging apparatus 1000.

The controller 400 performs control such that the laser emitter 100 will radiate a laser beam with a timing different from the timing of ranging.

From the first measurement device 310, the controller 400 receives the received light intensity of the laser beam radiated by the laser emitter 100.

From the second measurement device 320, the controller 400 receives the temperature of the laser beam radiated by the laser emitter 100.

Based on the temperature and received light intensity of the laser beam, the controller 400 calculates the tilt amount of the bandpass filter 210. Based on the calculated amount of tilt, the controller 400 generates an input signal to be sent to the first actuator 220.

The controller 400 sends the input signal to the first actuator 220, and thereby controls the tilt of the bandpass filter 210.

The controller 400 controls emission timing of the laser beam radiated by the laser emitter 100.

The laser emitter 100 radiates the laser beam based on a signal from the controller 400.

FIG. 4 shows an exemplary hardware configuration of a built-in computer configured to run a series of processes of the controller 400 using a program. In the computer, a CPU 1001, a ROM 1002, and a RAM 1003 are interconnected via a bus 1004.

The bus 1004 is connected with a storage 1005 and a communications interface 1006.

The storage 1005 is a memory device storing tabular data and the like, and is made up, for example, of a hard disk, a RAM disk, or a nonvolatile memory. The communications interface 1006 is made up, for example, of a network interface.

On the computer configured as described above, the series of processes described above is performed as the CPU 1001 executes a program stored, for example, in the storage 1005 and loaded into the RAM 1003 via the bus 1004. The RAM 1003 also stores, as appropriate, data and the like needed for the CPU 1001 to execute various processes.

The program can also, be provided via a wired or wireless a transmission medium such as a local area network, the Internet, or digital satellite broadcasting. In that case, the program can be received via the communications interface 1006 and installed in the storage 1005.

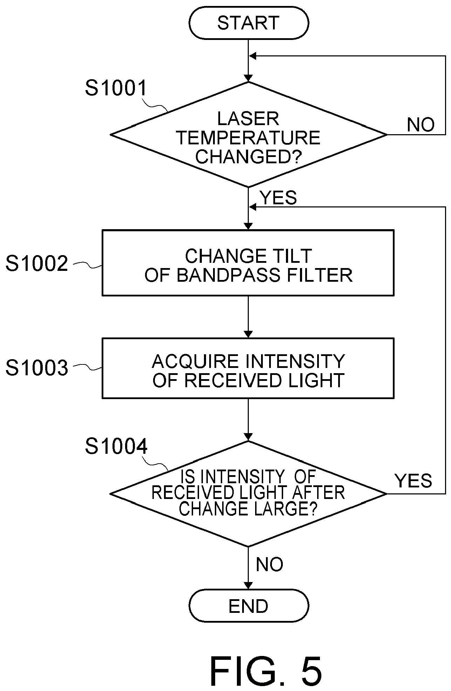

FIG. 5 shows an example of an operation performed by the controller 400.

The controller 400 performs the operation when ranging cannot be done such as during start-up or during gaps in rotations of the rotating mirror device 241.

The operation is premised on moving the tilt of the bandpass filter 210 minutely in a specific direction.

For example, the controller 400 performs control such that the first actuator 220 will gradually increase the tilt amount of the bandpass filter 210 and stop the operation just when a maximum intensity of received light is reached.

First, the controller 400 determines whether the second measurement device 320 has detected that the temperature of the laser beam has changed by no less than a certain amount (S1001).

Specifically, the controller 400 detects the laser beam temperature detected by the second measurement device 320. The controller 400 compares whether the detected laser beam temperature has not exceeded a set threshold.

If it is detected that the laser beam temperature has changed by no less than the certain amount, the controller 400 goes to S1002, but if the temperature has not changed by no less than the certain amount, the controller 400 repeats the process of step S1001.

Next, the controller 400 changes the tilt of the bandpass filter 210 (S1002).

Specifically, the controller 400 sends an input signal to the first actuator 220.

The input signal sent by the controller 400 causes the bandpass filter 210 to move minutely in a specific direction.

Based on the input signal sent from the controller 400, the first actuator 220 tilts the bandpass filter 210.

Next, the controller 400 acquires the intensity of received light from the light receiver 300 (S1003).

Next, the controller 400 determines whether the intensity of received light after the change is large (S1004).

Specifically, the controller 400 compares the intensity of received light acquired from the light receiver 300 with the intensity of received light acquired before the bandpass filter 210 is tilted.

If the intensity of received light after the change is large, the controller 400 returns to step S1002. If the intensity of received light after the change is not large, i.e., the intensity is equal to or smaller than the intensity of received light before the change, the controller 400 finishes the process.

The controller 400 may perform control differently from the present process.

For example, without using the laser beam temperature measured by the second measurement device 320, the controller 400 may perform control in such a way as to adjust the bandpass filter 210 and thereby maximize the intensity of received light measured by the first measurement device 310.

For example, the controller 400 examines an optimum tilt amount of the bandpass filter 210 in advance in the light of the laser beam temperature measured by the second measurement device 320. Based on the examined tilt amount, the controller 400 may perform control so as to set the bandpass filter 210 to the optimum tilt amount based on the examined tilt amount instead of performing control in such a way as to maximize the intensity of received light by watching the intensity of received light in the light of the laser beam temperature.

For example, the controller 400 checks an overall tendency of the received light intensity by greatly changing an entire range of movement in advance without causing the bandpass filter 210 to repeat minute changes. By gradually reducing the range of movement, the controller 400 may perform control in such a way as to find such a tilt amount that will maximize the intensity of received light more quickly.

According to the present embodiment, the ranging apparatus 1000 can change the transmission wavelength of the optical bandpass filter. That is, the ranging apparatus 1000 can respond to changes in the wavelength of an emergent light source.

Consequently, the ranging apparatus 1000 can improve ranging performance in environment light containing ambient light using an optical bandpass filter with a narrow transmission wavelength.

### (Variation 1)

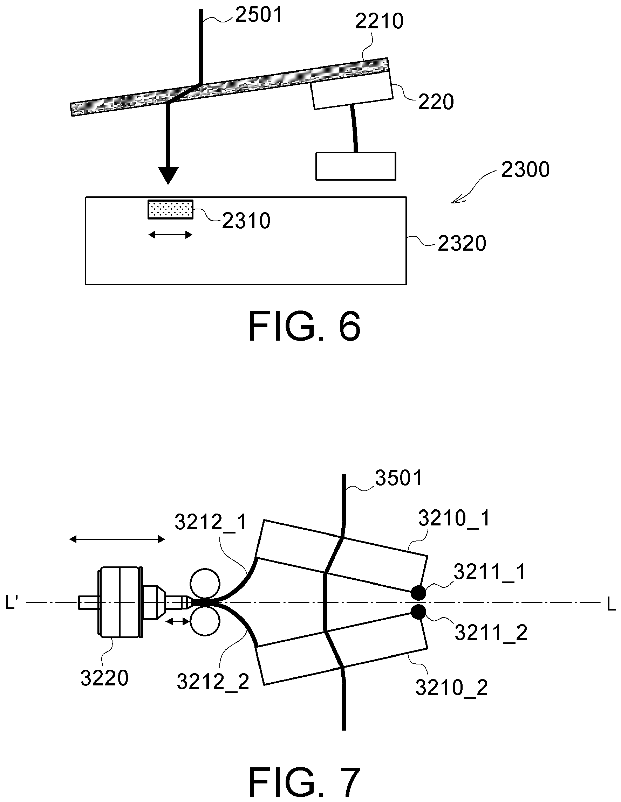

FIG. 6 is a diagram showing a bandpass filter 2210, a first actuator 220, and a light receiver 2300 according to the present variation.

According to Variation 1, a ranging apparatus 2000 includes the bandpass filter 2210 and the light receiver 2300.

Except for the bandpass filter 2210 and the light receiver 2300, components of the ranging apparatus 2000 are the same as those of the ranging apparatus 1000, and thus description of the other components will be omitted.

The bandpass filter 2210 is an optical bandpass filter configured to extract a specific wavelength component from a reflected laser beam and ambient light.

The bandpass filter 2210 causes reflected light 2501 to refract according to tilting of the bandpass filter 2210. As a result of the refraction, the reflected light 2501 changes its traveling direction without undergoing a frequency change. That is, the reflected light 2501 has its optical axis shifted transversely according to the tilting of the bandpass filter 2210.

The light receiver 2300 detects the received light intensity of the reflected laser beam and sends the received light intensity to the controller 400. The light receiver 2300 includes a first measurement device 2310 and a second actuator 2320.

The first measurement device 2310 measures the received light intensity of the received laser beam.

The first measurement device 2310 is, for example, a photosensor.

The light receiver 2300 does not have to include any light other than the light received by the first measurement device 2310 in the intensity of received light relevant to ranging.

The second actuator 2320 changes the position of the first measurement device 2310. The second actuator 2320 shifts the first measurement device 2310 under the control of the controller 400. By shifting the first measurement device 2310, the second actuator 2320 can shift a light receiving position of the reflected light.

For example, the second actuator 2320, which is a moving mechanism configured to move the entire light receiver 2300 including the first measurement device 2310, shifts the entire light receiver 2300 in response to a shift in the optical axis of the reflected light 2501. This enables position adjustment such that the reflected light 2501 will be received by the first measurement device 2310.

For example, the second actuator 2320 is a carriage which moves along rails and on which the first measurement device 2310 is mounted.

By moving the carriage along the rails, the second actuator 2320, adjusts the position of the first measurement device 2310.

For example, the first measurement device 2310 can switch between enabled state and disabled state of received-light detection.

The first measurement device 2310 is placed on an entire surface on which the light receiver 2300 receives light and switches between enabled state and disabled state. The first measurement device 2310 switches the state of received-light detection. Consequently, although the first measurement device 2310 itself remains in place, shifting of a light reception surface causes the first measurement device 2310 to shift in position in a pseudo way.

According to Variation 1, the position in which the light receiver 300 receives light can be shifted according to the amount of tilt set on the bandpass filter 2210.

Consequently, even if there is a change in the light reception path as the reflected light 2501 is refracted by the bandpass filter 2210, the intensity of received light can be detected correctly.

### (Variation 2)

FIG. 7 shows bandpass filters 3210 and a first actuator 3220 according to the present variation.

According to Variation 2, a ranging apparatus 3000 includes the bandpass filters 3210 and the first actuator 3220.

Except for the bandpass filters 3210 and the first actuator 3220, components of the ranging apparatus 3000 are the same as those of the ranging apparatus 1000, and thus description of the other components will be omitted.

FIG. 7 is symmetrical with respect to a dotted line L-L' serving as an axis of symmetry.

The bandpass filters 3210 are optical bandpass filters configured to extract a specific wavelength component from a reflected laser beam and ambient light.

The bandpass filters 3210 include two bandpass filters 3210_1 (a first bandpass filter) and 3210_2 (a second bandpass filter).

The bandpass filters 3210_1 and 3210_2 are the same bandpass filters and passes the same wavelength band.

The bandpass filters 3210_1 and 3210_2 refract reflected light 3501 according to their tilts.

Based on the input signal sent from the controller 400, the first actuator 3220 tilts the bandpass filter 3210.

The first actuator 3220 is a mechanism that operates as indicated by arrows in FIG. 7. The bandpass filter 3210 rotates around a shaft 3211 to which one end of the bandpass filter 3210 is fixed.

The first actuator 3220 is connected to the bandpass filter 3210 via a link 3212 connected to an end of the bandpass filter 3210.

The link 3212 is made of a material that deforms in shape, but does not stretch.

When the first actuator 3220 operates, for example, in such a way as to press the link 3212, the bandpass filter 3210 rotates around the shaft 3211, increasing the tilt of the bandpass filter 3210.

When the first actuator 3220 operates, for example, in such a way as to pull the link 3212, the bandpass filter 3210 rotates around the shaft 3211, decreasing the tilt of the bandpass filter 3210.

According to the present embodiment, the bandpass filters 3210_1 and 3210_2 are connected to the links 3212_1 and 3212_2, and operate symmetrically along with operation of the first actuator 3220.

For example, when the first actuator 3220 moves the link 3212_1, the bandpass filter 3210_1 rotates around the shaft 3211_1 and thereby tilts.

In so doing, the link 3212_2 moves symmetrically to the link 3212_1 with respect to the dotted line L-L' serving as an axis of symmetry. Consequently, the bandpass filter 3210_2 rotates around the shaft 3211_2 and thereby tilts as with the bandpass filter 3210_1. That is, the bandpass filters 3210_1 and 3210_2 tilt symmetrically with respect to the dotted line L-L' serving as an axis of symmetry.

The reflected light 3501 refracted by the bandpass filter 3210_1 thereby changes its traveling direction without undergoing a frequency change. That is, the reflected light 3501 as passed light 3052 has its optical axis shifted transversely according to the tilting of the bandpass filter 3210_1. That is, the reflected light 3501 has its optical path changed from a light reception path (first optical path) to a transparent path (second optical path).

The passed light 3052 is further refracted by the bandpass filter 3210_2 and thereby has its optical axis shifted transversely according to the tilting of the bandpass filter 3210_2.

The passed light 3052 passes through the transparent path.

The passed light 3052 is refracted by the bandpass filter 3210_2, and thereby further shifts an optical axis of the reflected light 3501 refracted by the bandpass filter 3210_1.

Here, the bandpass filters 3210 are tilted symmetrically to each other.

That is, the use of plural optical bandpass filters in combination makes it possible to cancel out shifting of the optical axis corresponding to the amount of tilt, changing the path for the passed light 3052 from the transparent path to the light reception path.

According to the present variation, the bandpass filters 3210 are moved symmetrically to each other by the first actuator 3220 using identical bandpass filters, but different bandpass filters may be used.

For example, a combination of bandpass filters differing in tilt may be moved by the first actuator 3220 to cancel out shifting of the optical axis.

### (Second embodiment)

In a second embodiment, description will be given of a ranging apparatus 4000 that controls the temperature of a laser source according to a pass band of an optical bandpass filter.

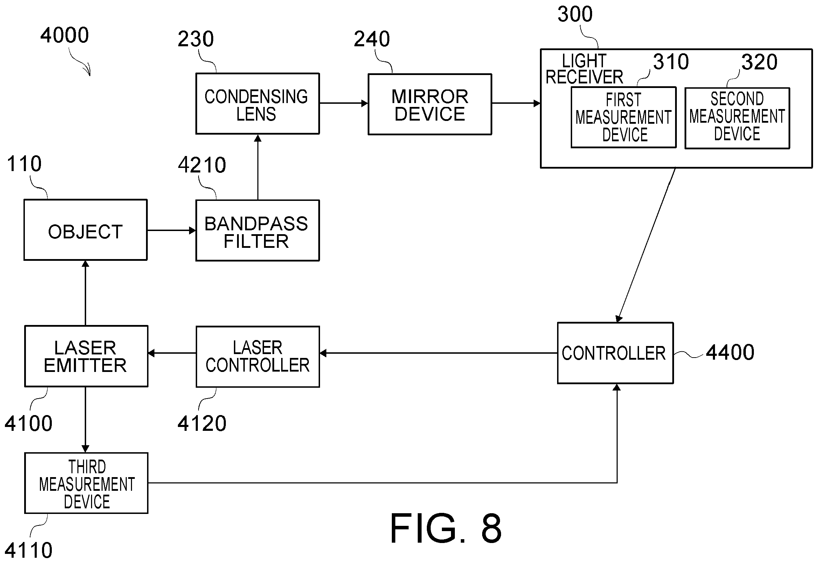

FIG. 8 shows a ranging apparatus 4000 according to the present embodiment. Components similar to those of the first embodiment are denoted by the same reference signs as the corresponding components, and description thereof will be omitted as appropriate. The ranging apparatus 4000 includes a laser emitter 4100, a third measurement device 4110, a laser controller 4120, a bandpass filter 4210, a condensing lens 230, a mirror device 240, a light receiver 300, and a controller 4400.

The laser emitter 4100 emits a laser beam at the object 110, which is a ranging target.

Based on a control signal received from the laser controller 4120, the laser emitter 4100 radiates a laser beam by varying the temperature of a laser source.

The radiated laser beam has a wavelength in a pass band of the bandpass filter 4210.

The laser emitter 4100 includes an element such as a peltier element that controls the temperature of a laser source by being placed close to the laser source.

The element controls the temperature of the laser source based on a control signal from the laser controller 4120.

The third measurement device 4110 measures the temperature of the laser source.

The third measurement device 4110 is, for example, a laser temperature sensor. The third measurement device 4110 measures the temperature of the laser source of the laser emitter 4100 and sends the temperature to the controller 4400.

The laser controller 4120 controls the temperature of the laser source based on a control signal sent from the controller 4400.

The laser controller 4120 sends the control signal to the laser emitter 4100.

The bandpass filter 4210 is an optical bandpass filter configured to extract a specific wavelength component from a reflected laser beam and ambient light.

The bandpass filter 4210 is installed in a fixed position and a laser beam enters the bandpass filter 4210 at a specific angle. That is, the transmission wavelength of the bandpass filter 4210 is fixed.

The laser beam passed through the bandpass filter 4210 has been adjusted to the transmission wavelength of the bandpass filter 4210 by the laser controller 4120.

The controller 4440 controls the laser controller 4120 so as to radiate a laser beam of a specific wavelength.

The controller 4440 acquires information from the light receiver 300, the second measurement device 320, and the third measurement device 4110, generates a control signal to be sent to the laser controller 4120, and sends the control signal.

For example, the controller 4400 acquires temperature information about the laser source of the laser emitter 4100 from the third measurement device 4110 and calculates a difference from the temperature of the laser source whose wavelength corresponds to the transmission wavelength of the bandpass filter 4210.

Based on the calculated temperature difference, the controller 4400 sends a control signal to the laser controller 4120, instructing the laser controller 4120 to make up the temperature difference.

For example, using the intensity of received light acquired from the light receiver 300 and laser temperature information acquired from the second measurement device 320, the controller 4400 calculates the laser beam temperature difference to be received by the light receiver 300.

Based on the calculated temperature difference, the controller 4400 sends a control signal to the laser controller 4120, instructing the laser controller 4120 to make up the temperature difference.

Regardless of the information acquired from the light receiver 300, the second measurement device 320, and the third measurement device 4110, the controller 4440 may generate a control signal such that the laser source will reach a specific temperature and send the signal to the laser controller 4120.

According to the present embodiment, the ranging apparatus 4000 varies the temperature of the laser source for the laser beam radiated by the laser emitter 4100. That is, the ranging apparatus 4000 adjusts the laser beam so as to match the transmission wavelength of the bandpass filter 4210.

In this way, the ranging apparatus 4000 can cut off light other than the laser beam radiated by the laser emitter 4100, without changing the pass band of the optical bandpass filter.

### (Third embodiment)

In a third embodiment, description will be given of a ranging apparatus 5000 that uses an optical bandpass filter made up of liquid crystal elements in order to control transmission wavelength of the optical bandpass filter.

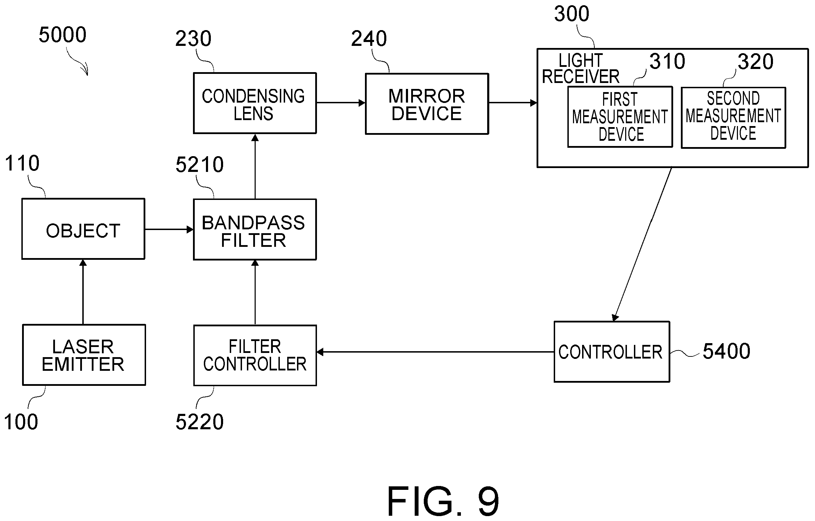

FIG. 9 shows the ranging apparatus 5000 according to the present embodiment. Components similar to those of the first embodiment are denoted by the same reference signs as the corresponding components, and description thereof will be omitted as appropriate. The ranging apparatus 5000 includes a laser emitter 100, a bandpass filter 5210, a filter controller 5220, a condensing lens 230, a mirror device 240, a light receiver 300, and a controller 5400.

The bandpass filter 5210 is an optical bandpass filter configured to extract a specific wavelength component from a reflected laser beam and ambient light.

The bandpass filter 5210 is an optical bandpass filter made up of liquid crystal elements.

The bandpass filter 5210 can change the transmission wavelength by controlling the liquid crystal elements making up the bandpass filter 5210.

The liquid crystal elements making up the bandpass filter 5210 can freely voltage-control various properties of light such as strength, wavelength, deflection, phase, and propagation direction.

The bandpass filter 5210 controls the liquid crystal elements based on a control signal received from the filter controller 5220.

The filter controller 5220 controls the control signal to be sent to the liquid crystal elements of the bandpass filter 5210.

Based on the control signal sent from the controller 5400, the filter controller 5220 generates and sends a control signal for the bandpass filter 5210.

The bandpass filter 5210 deflects the transmission wavelength based on the control signal.

The controller 5400 controls the filter controller 5220.

The controller 5400 acquires information from the light receiver 300 and the first measurement device 310, generates a control signal to be sent to the filter controller 5220, and sends the control signal.

The control signal generated by the controller 5400 may be a signal that indicates a transmission wavelength of the bandpass filter 5210 or a signal that controls the liquid crystal elements contained in the bandpass filter 5210.

According to the present embodiment, the ranging apparatus 5000 electrically controls the bandpass filter 5210. That is, by controlling the liquid crystal elements making up the bandpass filter 5210, the ranging apparatus 5000 changes the transmission wavelength.

In this way, the optical bandpass filter does not have a physical mechanism, and the ranging apparatus 5000 can change the transmission wavelength only by electrically controlling a signal.

The embodiments as described before may be configured as below.

### (Clauses)

Clause 1. A ranging apparatus comprising:
an emitter configured to emit a laser beam;
a bandpass filter configured to pass light having a transmission wavelength among reflected light of the laser beam; and
a controller configured to control the transmission wavelength of the bandpass filter.

Clause 2. The ranging apparatus according to clause 1, further comprising a light receiver configured to detect light passed through the bandpass filter.

Clause 3. The ranging apparatus according to clause 2, wherein the controller controls the transmission wavelength of the bandpass filter by tilting the bandpass filter with respect to the reflected light incident upon the bandpass filter.

Clause 4. The ranging apparatus according to clause 3, wherein based on an angle of incidence by which the reflected light enters the bandpass filter, the controller controls an amount of tilt by which the bandpass filter is tilted.

Clause 5. The ranging apparatus according to clause 4, further comprising a first actuator configured to tilt the bandpass filter based on the amount of tilt, wherein
the first actuator uses a moving mechanism that is based on a stepping motor.

Clause 6. The ranging apparatus according to clause 4 or 5, further comprising a second actuator configured to shift a light receiving position in which the light receiver receives light passed through the bandpass filter, wherein
the second actuator shifts the light receiving position based on the amount of tilt of the bandpass filter.

Clause 7. The ranging apparatus according to any one of clauses 2 to 6, wherein:
the bandpass filter includes liquid crystal elements; and
the controller changes the transmission wavelength by controlling the liquid crystal elements.

Clause 8. The ranging apparatus according to any one of clauses 2 to 6, wherein:
the light receiver includes a first measurement device configured to measure light intensity of the reflected light passed through the bandpass filter; and
the controller changes the transmission wavelength of the bandpass filter according to a measured value of the light intensity.

Clause 9. The ranging apparatus according to any one of clauses 2 to 6, wherein:
the light receiver includes a second measurement device configured to measure temperature of the laser beam passed through the bandpass filter; and
the controller changes the transmission wavelength according to a measured value of the temperature.

Clause 10. The ranging apparatus according to any one of clauses 2 to 9, further comprising a condensing lens configured to condense the light passed through the bandpass filter to the light receiver.

Clause 11. The ranging apparatus according to any one of clauses 2 to 10, further comprising a mirror device configured to change a first optical path, which is an optical path for the reflected light to the bandpass filter.

Clause 12. The ranging apparatus according to any one of clauses 1 to 11, wherein:
the emitter includes a third measurement device configured to detect temperature of a source of the laser beam, and a laser controller configured to control the temperature of the source; and
based on the temperature of the source detected by the third measurement device, the laser controller controls the temperature of the source and thereby changes wavelength of the laser beam emitted by the source to the transmission wavelength of the bandpass filter.

Clause 13. The ranging apparatus according to any one of clauses 1 to 12, comprising a first bandpass filter and a second bandpass filter, wherein
an optical path of reflected light of the laser beam entering the first bandpass filter along a first optical path is changed to a second optical path by the first bandpass filter, and an optical path of passed light of the first bandpass filter entering the second bandpass filter along the second optical path is changed to the first optical path by the second bandpass filter.

Clause 14. The ranging apparatus according to any one of clauses 1 to 13, comprising at least two or more bandpass filters, wherein:
the bandpass filters have different transmission wavelengths, and
a bandpass filter which the reflected light enters is switched between/among the bandpass filters.

Clause 15. The ranging apparatus according to any one of clauses 1 to 14, further comprising a plurality of the bandpass filters, which the reflected light enters.

Clause 16. A method for controlling a ranging apparatus, comprising:
emitting a laser beam;
passing light having a transmission wavelength among reflected light of the laser beam; and
controlling the transmission wavelength.

While certain embodiment have been described, these embodiment have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A ranging apparatus comprising:
an emitter (100) configured to emit a laser beam;
a bandpass filter (210) configured to pass light having a transmission wavelength among reflected light of the laser beam; and
a controller (400) configured to control the transmission wavelength of the bandpass filter.

2. The ranging apparatus according to claim 1, further comprising a light receiver (300) configured to detect light passed through the bandpass filter.

3. The ranging apparatus according to claim 2, wherein the controller (400) controls the transmission wavelength of the bandpass filter by tilting the bandpass filter with respect to the reflected light incident upon the bandpass filter.

4. The ranging apparatus according to claim 3, wherein based on an angle of incidence by which the reflected light enters the bandpass filter, the controller (400) controls an amount of tilt by which the bandpass filter is tilted.

5. The ranging apparatus according to claim 4, further comprising a first actuator (220) configured to tilt the bandpass filter based on the amount of tilt, wherein
the first actuator (220) uses a moving mechanism that is based on a stepping motor.

6. The ranging apparatus according to claim 4, further comprising a second actuator (2320) configured to shift a light receiving position in which the light receiver receives light passed through the bandpass filter, wherein
the second actuator (2320) shifts the light receiving position based on the amount of tilt of the bandpass filter.

7. The ranging apparatus according to claim 2, wherein:
the bandpass filter (210) includes liquid crystal elements; and
the controller (400) changes the transmission wavelength by controlling the liquid crystal elements.

8. The ranging apparatus according to claim 2, wherein:
the light receiver (300) includes a first measurement device configured to measure light intensity of the reflected light passed through the bandpass filter; and
the controller (400) changes the transmission wavelength of the bandpass filter according to a measured value of the light intensity.

9. The ranging apparatus according to claim 2, wherein:
the light receiver (300) includes a second measurement device configured to measure temperature of the laser beam passed through the bandpass filter; and
the controller (400) changes the transmission wavelength according to a measured value of the temperature.

10. The ranging apparatus according to claim 2, further comprising a condensing lens (230) configured to condense the light passed through the bandpass filter to the light receiver.

11. The ranging apparatus according to claim 2, further comprising a mirror device (240) configured to change a first optical path, which is an optical path for the reflected light to the bandpass filter.

12. The ranging apparatus according to claim 1, wherein:
the emitter (100) includes a third measurement device (4110) configured to detect temperature of a source of the laser beam, and a laser controller (4120) configured to control the temperature of the source; and
based on the temperature of the source detected by the third measurement device, the laser controller (4120) controls the temperature of the source and thereby changes wavelength of the laser beam emitted by the source to the transmission wavelength of the bandpass filter.

13. The ranging apparatus according to claim 1, comprising a first bandpass filter (3210_1) and a second bandpass filter (3210_2), wherein
an optical path of reflected light of the laser beam entering the first bandpass filter along a first optical path is changed to a second optical path by the first bandpass filter, and an optical path of passed light of the first bandpass filter entering the second bandpass filter along the second optical path is changed to the first optical path by the second bandpass filter.

14. The ranging apparatus according to claim 1, comprising at least two or more bandpass filters (210), wherein:
the bandpass filters (210) have different transmission wavelengths, and
a bandpass filter (210) which the reflected light enters is switched between/among the bandpass filters.

15. A method for controlling a ranging apparatus, comprising:
emitting a laser beam;
passing light having a transmission wavelength among reflected light of the laser beam; and
controlling the transmission wavelength.
